# EUROPEAN PATENT SPECIFICATION

(11) **EP 3 358 027 B1**
(45) Date of publication and mention of the grant of the patent: **06.11.2019**
(21) Application number: 16850566.7
(22) Date of filing: 25.08.2016
(51) Int. Cl.: C22C 38/00, C21D 8/12, C22C 38/06, C22C 38/14, H01F 1/16, C22C 38/02, C22C 38/04, C22C 38/12, C21D 6/00, C21D 8/00, C21D 9/46

(54) **NON-ORIENTED ELECTROMAGNETIC STEEL SHEET AND MANUFACTURING METHOD OF SAME**
NICHTORIENTIERTES ELEKTROMAGNETISCHES STAHLBLECH SOWIE VERFAHREN ZUR HERSTELLUNG DAVON
TÔLE D'ACIER ÉLECTROMAGNÉTIQUE À GRAINS NON ORIENTÉS ET PROCÉDÉ DE FABRICATION DE CETTE DERNIÈRE

(30) Priority: 02.10.2015 JP 2015197103
(43) Date of publication of application: 08.08.2018
(73) Proprietor: JFE Steel Corporation, Tokyo 100-0011 (JP)
(72) Inventor: ODA, Yoshihiko, Tokyo 100-0011 (JP); NAKANISHI, Tadashi, Tokyo 100-0011 (JP); OKUBO, Tomoyuki, Tokyo 100-0011 (JP); ZAIZEN, Yoshiaki, Tokyo 100-0011 (JP); NAKAJIMA, Hiroaki, Tokyo 100-0011 (JP)
(74) Representative: Haseltine Lake Kempner LLP
(86) International application number: PCT/JP2016/003878
(87) International publication number: WO 2017/056383

(56) References cited:
- WO-A1-2004/013365
- JP-A- H10 183 311
- JP-A- H10 251 752
- JP-A- H11 172 382
- JP-A- 2001 059 145
- JP-A- 2001 059 145
- JP-A- 2001 073 097
- JP-A- 2002 180 213
- JP-A- 2004 084 053
- JP-A- 2011 140 683
- JP-B2- S5 752 410
- KR-A- 20100 071 213
- KR-B1- 101 130 725
- US-A- 5 639 315
- US-A1- 2008 121 314

## Description

### TECHNICAL FIELD

This disclosure relates to a non-oriented electrical steel sheet and a method of producing the same.

### BACKGROUND

Recently, high efficiency induction motors are being used to meet increasing energy saving needs in factories. To improve efficiency of such motors, attempts are being made to increase a thickness of an iron core lamination and improve the winding filling factor thereof. Further attempts are being made to replace a conventional low grade material with a higher grade material having low iron loss properties as an electrical steel sheet used for iron cores.

Additionally, from the viewpoint of reducing copper loss, such core materials for induction motors are required to have low iron loss properties and to lower the exciting effective current at the designed magnetic flux density. In order to reduce the exciting effective current, it is effective to increase the magnetic flux density of the core material.

Further, in the case of drive motors of hybrid electric vehicles, which have been rapidly spreading recently, high torque is required at the time of starting and accelerating, and thus further improvement of magnetic flux density is desired.

As an electrical steel sheet having a high magnetic flux density, for example, JP2000129410A (PTL 1) describes a non-oriented electrical steel sheet made of a steel to which Si is added at 4 % or less and Co at 0.1 % or more and 5 % or less. However, since Co is very expensive, leading to the problem of a significant increase in cost when applied to a general motor.

To improve the magnetic flux density of an electrical steel sheet, it is effective to reduce the grain size before performing cold rolling. For example, JP2006291346A (PTL 2) describes a technique for increasing the magnetic flux density by subjecting a steel containing Si of 1.5 % or more and 3.5 % or less to high-temperature hot band annealing so as to provide a grain size of 300 µm or more before performing cold rolling. However, performing hot band annealing at high temperature leads to the problems of increased costs and an increased grain size before cold rolling, making sheet fracture more likely to occur during cold rolling.

On the other hand, use of a material with a low Si content makes it possible to increase the magnetic flux density without performing hot band annealing, yet such a material is soft, and experiences a significant increase in iron loss when pun ched into a motor core material.
JP2001059145A describes a nonoriented silicon steel sheet excellent in blankability and cauking property at the time of being used as a stock for an iron core of motor and formed into an iron core and excellent in magnetic property at the time of being used as an iron core, its manufacturing method, and an iron core.
JPH10251752A describes a silicon steel sheet excellent in magnetic properties in an as-hot-rolled state while obviating the necessity of particular finish annealing treatment, by applying sufficient strain by hot rolling and improving a texture.
US2008/121314A1 describes technology for manufacturing electrical steel sheets having excellent magnetic properties through the control of a hot-rolled texture using the phase transformation of steel. More particularly, it relates to a non-oriented electrical steel sheet that has reduced iron loss and increased magnetic flux density by controlling alloy component elements and optimizing hot-rolling conditions, even though hot-rolled sheet annealing is not carried out, as well as a manufacturing method thereof.
KR101130725B1 describes non-oriented electrical steel sheets with excellent magnetic properties and methods for manufacturing the same.

### CITATION LIST

### Patent Literature

PTL 1: JP2000129410A
PTL 2: JP2006291346A

### SUMMARY

### (Technical Problem)

Under these circumstances, there is a demand for a technique for increasing the magnetic flux density of an electrical steel sheet and reducing the iron loss without causing a significant increase in cost.

It would thus be helpful to provide a non-oriented electrical steel sheet with an increased magnetic flux density and reduced iron loss, and a method of producing the same.

### (Solution to Problem)

We conducted intensive studies on the solution of the above-mentioned issues, and as a result, found that by formulating a chemical composition with which a γ→α transformation (transformation from γ phase to α phase) is caused to occur during hot rolling and by adjusting the Vickers hardness within a range of 140 HV to 230 HV, it is possible to provide materials achieving a good balance between the magnetic flux density and iron loss properties without performing hot band annealing.

The present disclosure was completed based on these findings, and the scope of the invention is defined in the appended claims.

### (Advantageous Effect)

According to the disclosure, it is possible to obtain an electrical steel sheet with high magnetic flux density and low iron loss without performing hot band annealing.

### BRIEF DESCRIPTION OF THE DRAWING

In the accompanying drawings:
FIG. 1 is a schematic view of a caulking ring sample; and
FIG. 2 is a graph illustrating the influence of Ar₃ transformation temperature on magnetic flux density B₅₀.

### DETAILED DESCRIPTION

The reasons for the limitations of the disclosure are described below. Firstly, in order to investigate the influence of the dual-phase region on the magnetic properties, Steel A to Steel C having the chemical compositions listed in Table 1 were prepared by steelmaking in a laboratory and hot rolled. The hot rolling was performed in 7 passes, where the entry temperature in the first pass (F1) was adjusted to 1030 °C and the entry temperature in the final pass (F7) to 910 °C.

**Table 1**

| Steel | Chemical composition (mass%) | | | | | | | | | | | | |
|---|---|---|---|---|---|---|---|---|---|---|---|---|---|
| | C | Si | Al | Mn | P | S | N | O | Ge | Ti | V | Zr | Nb |
| A | 0.0015 | 1.40 | 0.500 | 0.20 | 0.010 | 0.0005 | 0.0020 | 0.0020 | 0.0001 | 0.0010 | 0.0010 | 0.0005 | 0.0005 |
| B | 0.0016 | 1.30 | 0.300 | 0.30 | 0.010 | 0.0007 | 0.0022 | 0.0018 | 0.0001 | 0.0010 | 0.0010 | 0.0005 | 0.0005 |
| C | 0.0016 | 1.70 | 0.001 | 0.30 | 0.010 | 0.0007 | 0.0022 | 0.0055 | 0.0001 | 0.0010 | 0.0010 | 0.0005 | 0.0005 |

After being pickled, each hot rolled sheet was cold rolled to a sheet thickness of 0.5 mm, and final annealed at 950 °C for 10 seconds in a 20 % H₂-80 % N₂ atmosphere.

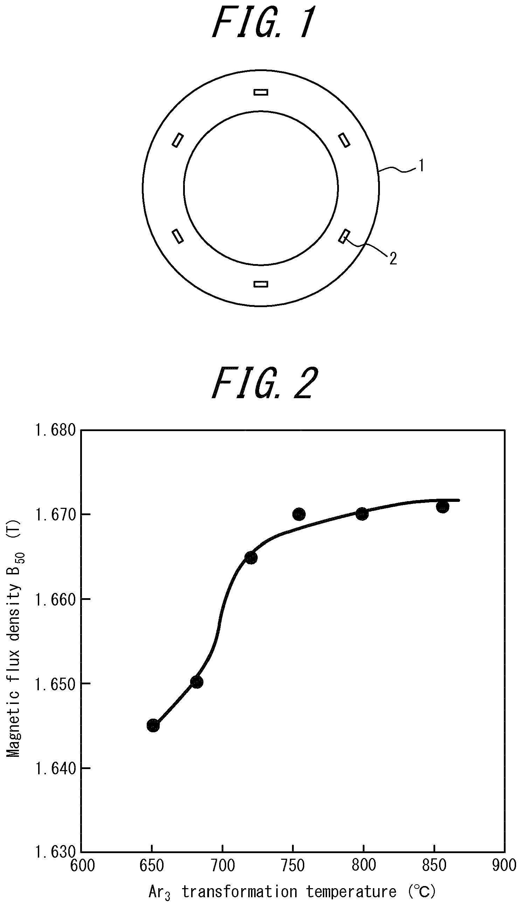

From each final annealed sheet thus obtained, a ring sample 1 having an outer diameter of 55 mm and an inner diameter of 35 mm was prepared by punching, V caulking 2 was applied at six equally spaced positions of the ring sample 1 as illustrated in FIG. 1, and 10 ring samples 1 were stacked and fixed together into a stacked structure. Magnetic property measurement was performed using the stacked structure with windings of the first 100 turns and the second 100 turns, and the measurement results were evaluated using a wattmeter. The Vickers hardness was measured in accordance with JIS Z2244 by pushing a 500 g diamond indenter into a cross section of each steel sheet. After polishing the cross section and etching with nital, measurement was made of the grain size in accordance with JIS G 0551.

Table 2 lists the magnetic properties of Steel A to Steel C in Table 1. Focusing attention on the magnetic flux density, it is understood that the magnetic flux density is low in Steel A and high in Steels B and C. In order to identify the cause, we investigated the texture of the material after final annealing, and it was revealed that the (111) texture which is disadvantageous to the magnetic properties was developed in Steel A as compared with Steels B and C. It is known that the microstructure of the electrical steel sheet before cold rolling has a large influence on the texture formation in the electrical steel sheet, and investigation was made on the microstructure after hot rolling, and it was found that Steel A had a non-recrystallized microstructure. For this reason, it is considered that in Steel A, a (111) texture was developed during the cold rolling and final annealing process after hot rolling.

**Table 2**

| Steel | Magnetic flux density B₅₀ (T) | Iron loss W_{15/50} (W/kg) | HV | Grain size (µm) |
|---|---|---|---|---|
| A | 1.65 | 3.60 | 145 | 121 |
| B | 1.70 | 4.20 | 135 | 120 |
| C | 1.70 | 3.50 | 150 | 122 |

We also observed the microstructures of Steels B and C after subjection to the hot rolling, and found that the microstructures were completely recrystallized. It is thus considered that in Steels B and C, formation of a (111) texture disadvantageous to the magnetic properties was suppressed and the magnetic flux density increased.

As described above, in order to identify the cause of varying microstructures after hot rolling among different steels, transformation behavior during hot rolling was evaluated by linear expansion coefficient measurement. As a result, it was revealed that Steel A has α single-phase from the high temperature range to the low temperature range, and that no phase transformation occurred during hot rolling. On the other hand, it was revealed that the Ar₃ transformation temperature was 1020 °C for Steel B and 950 °C for Steel C, and that γ→α transformation occurred in the first pass in Steel B and in the third to fifth passes in Steel C. It is considered that the occurrence of γ→α transformation during hot rolling caused the recrystallization to proceed with the transformation strain as the driving force.

From the above, it is important to have γ→α transformation in the temperature range where hot rolling is performed. Therefore, the following experiment was conducted to identify the Ar₃ transformation temperature at which γ→α transformation should be completed. Specifically, steels, each containing C: 0.0017 %, Al: 0.001 %, P: 0.010 %, S: 0.0007 %, N: 0.0022 %, O: 0.0050 % to 0.0070 %, Ge: 0.0001 %, Ti: 0.0010 %, V: 0.0010 %, Zr: 0.0005 %, and Nb: 0.0005 % as basic components, and respectively having different Si and Mn contents for different Ar₃ transformation temperatures, were prepared by steelmaking in a laboratory and formed into slabs. The slabs thus obtained were subjected to hot rolling. The hot rolling was performed in 7 passes, where the entry temperature in the first pass (F1) was adjusted to 900 °C and the entry temperature in the final pass (F7) to 780 °C, such that at least one pass of the hot rolling was performed in a dual phase region from α-phase to γ-phase.

After being pickled, each hot rolled sheet was cold rolled to a sheet thickness of 0.5 mm and subjected to final annealing at 950 °C for 10 seconds in a 20 % H₂-80 % N₂ atmosphere.

From each final annealed sheet thus obtained, a ring sample 1 having an outer diameter of 55 mm and an inner diameter of 35 mm was prepared by punching, V caulking 2 was applied at six equally spaced positions of the ring sample 1 as illustrated in FIG. 1, and 10 ring samples 1 were stacked and fixed together. Magnetic property measurement was performed using the stacked structure with windings of the first 100 turns and the second 100 turns, and the measurement results were evaluated using a wattmeter.

FIG. 2 illustrates the influence of the Ar₃ transformation temperature on the magnetic flux density B₅₀. It can be seen that when the Ar₃ transformation temperature is 700 °C or lower, the magnetic flux density B₅₀ decreases. Although the reason is not clear, it is considered to be that when the Ar₃ transformation temperature was 700 °C or lower, the grain size before cold rolling was so small that caused a (111) texture disadvantageous to the magnetic properties to be developed in the process from the subsequent cold rolling to final annealing.

From the above, the Ar₃ transformation temperature is set to 700 °C or higher.
However, it is important that γ→α transformation is caused to occur during hot rolling, and at least one pass of the hot rolling needs to be performed in a dual phase region of γ-phase and α-phase. In view of this,
the Ar₃ transformation temperature is set to 1000 °C or lower. This is because performing hot rolling during transformation promotes development of a texture which is preferable for the magnetic properties.

Focusing on the evaluation of iron loss in Table 2 above, it can be seen that iron loss is low in Steels A and C and high in Steel B. Although the cause is not clear, it is considered to be that since the hardness (HV) of the steel sheet after final annealing was low in Steel B, a compressive stress field generated by punching and caulking was spread easily and iron loss increased. Therefore, the Vickers hardness is set to 140 HV or more, and preferably 150 HV or more. On the other hand, a Vickers hardness above 230 HV wears the mold more severely, which unnecessarily increases the cost. Therefore, the upper limit is set to 230 HV.

The following describes a non-oriented electrical steel sheet according to one of the disclosed embodiments. Firstly, the reasons for limitations on the chemical composition of steel will be explained. When components are expressed in "%", this refers to "mass%" unless otherwise specified.

### C: 0.0050 % or less

C content is set to 0.0050 % or less from the viewpoint of preventing magnetic aging. On the other hand, since C has an effect of improving the magnetic flux density, the C content is preferably 0.0010 % or more.

### Si: 1.50 % or more and 4.00 % or less

Si is a useful element for increasing the specific resistance of a steel sheet. Thus, the Si content is preferably set to 1.50 % or more. On the other hand, Si content exceeding 4.00 % results in a decrease in saturation magnetic flux density and an associated decrease in magnetic flux density. Thus, the upper limit for the Si content is set to 4.00 %. The Si content is preferably 3.00 % or less. This is because, if the Si content exceeds 3.00 %, it is necessary to add a large amount of Mn in order to obtain a dual phase region, which unnecessarily increases the cost.

### Al: 0.020% or less

Al is a γ-region closed type element, and a lower Al content is preferable. The Al content is set to 0.020 % or less,
preferably 0.002 % or less.

### Mn: 0.10 % or more and 5.00 % or less

Since Mn is an effective element for enlarging the γ region, the lower limit for the Mn content is set to 0.10 %. On the other hand, Mn content exceeding 5.00 % results in a decrease in magnetic flux density. Thus, the upper limit for the Mn content is set to 5.00 %. The Mn content is preferably 3.00 % or less. The reason is that Mn content exceeding 3.00 % unnecessarily increases the cost.

### S: 0.0200 % or less

S causes an increase in iron loss due to precipitation of MnS if added beyond 0.0200 %. Thus, the upper limit for the S content is set to 0.0200 %.

### P: 0.200 % or less

P increases the hardness of the steel sheet if added beyond 0.200 %. Thus, the P content is set to 0.200 % or less, and more preferably 0.100 % or less. Further preferably, the P content is set within a range of 0.010 % to 0.050 %. This is because P has the effect of suppressing nitridation by surface segregation.

### N: 0.0050 % or less

N causes more AlN precipitation and increases iron loss if added in a large amount. Thus, the N content is set to 0.0050 % or less.

### O: 0.0200 % or less

O causes more oxides and increases iron loss if added in a large amount. Thus, the O content is set to 0.0200 % or less.

The basic components of the steel sheet according to the disclosure have been described. The balance other than the above components consist of Fe and inevitable impurities. However, the following optional elements may also be added as appropriate.

### Ge: 0.0500 % or less

Ge is an element that is easily incorporated in scraps because it is used for semiconductors. However, if the Ge content exceeds 0.0500 %, recrystallization after hot rolling is suppressed and the magnetic flux density may be lowered. Thus, the upper limit for the Ge content is set to 0.0500 %.

### Ti: 0.0030 % or less

Ti causes more TiN precipitation and may increase iron loss if added in a large amount. Thus, the Ti content is set to 0.0030 % or less.

### Nb: 0.0030 % or less

Nb causes more NbC precipitation and may increase iron loss if added in a large amount. Thus, the Nb content is set to 0.0030 % or less.

### V: 0.0030 % or less

V causes more VN and VC precipitation and may increase iron loss if added in a large amount. Thus, the V content is set to 0.0030 % or less.

### Zr: 0.0020 % or less

Zr causes more ZrN precipitation and may increase iron loss if added in a large amount. Thus, the Zr content is set to 0.0020 % or less.

The average grain size is 80 µm or more and 200 µm or less. When the average grain size is less than 80 µm, the Vickers hardness can be adjusted to 140 HV or more even with a low-Si material. If the grain size is small, however, the iron loss would increase. Therefore, the grain size is set to 80 µm or more. On the other hand, when the grain size exceeds 200 µm, plastic deformation due to punching and caulking increases, resulting in increased iron loss. Therefore, the upper limit for the grain size is set to 200 µm. To obtain a grain size of 80 µm or more and 200 µm or less, it is necessary to appropriately control the final annealing temperature. In addition, to provide a Vickers hardness of 140 HV or more and 230 HV or less, it is necessary to appropriately add a solid-solution-strengthening element such as Si, Mn, or P.

The following provides a specific description of the conditions for producing non-oriented electrical steel sheets according to the disclosure.

In the disclosure, non-oriented electrical steel sheets may be produced following conventional methods as long as the chemical composition and the hot rolling conditions defined in the disclosure are within the predetermined ranges. That is, molten steel is subjected to blowing in the converter and degassing treatment where it is adjusted to a predetermined chemical composition, and subsequently to casting and hot rolling. The finisher delivery temperature and the coiling temperature during hot rolling are not particularly specified, yet it is necessary to perform at least one pass of the hot rolling in a dual phase region of γ-phase and α-phase. The coiling temperature is preferably set to 650 °C or lower in order to prevent oxidation during coiling. Then, the steel sheet is subjected to cold rolling once, or twice or more with intermediate annealing performed therebetween, to a predetermined sheet thickness, and to the subsequent final annealing.

### EXAMPLES

Molten steel was subjected to blowing in the converter to prepare steel samples. Each steel sample was then subjected to degassing treatment, cast into the chemical compositions in Table 3, subjected to slab reheating at 1140 °C for 1 h, and hot rolled to obtain a steel sheet having a sheet thickness of 2.0 mm. The hot finish rolling was performed in 7 passes, the entry temperature in the first pass and the entry temperature in the final pass were set as listed in Table 3, and the coiling temperature was set to 670 °C. Thereafter, each steel sheet was subjected to pickling, cold rolling to a sheet thickness of 0.5 mm, and final annealing in a 20 % H₂-80 % N₂ atmosphere under the conditions in Table 3. Then, the magnetic properties (W_{15/50}, B₅₀) and hardness (HV) were evaluated. In the magnetic property measurement, Epstein samples were cut in the rolling direction and the direction perpendicular to the rolling direction from each steel sheet, and Epstein measurement was performed. Vickers hardness was measured in accordance with JIS Z2244 by pressing a 500 g diamond indenter into a cross section of each steel sheet. The grain size was measured in accordance with JIS G0551 after polishing the cross section and etching with nital.

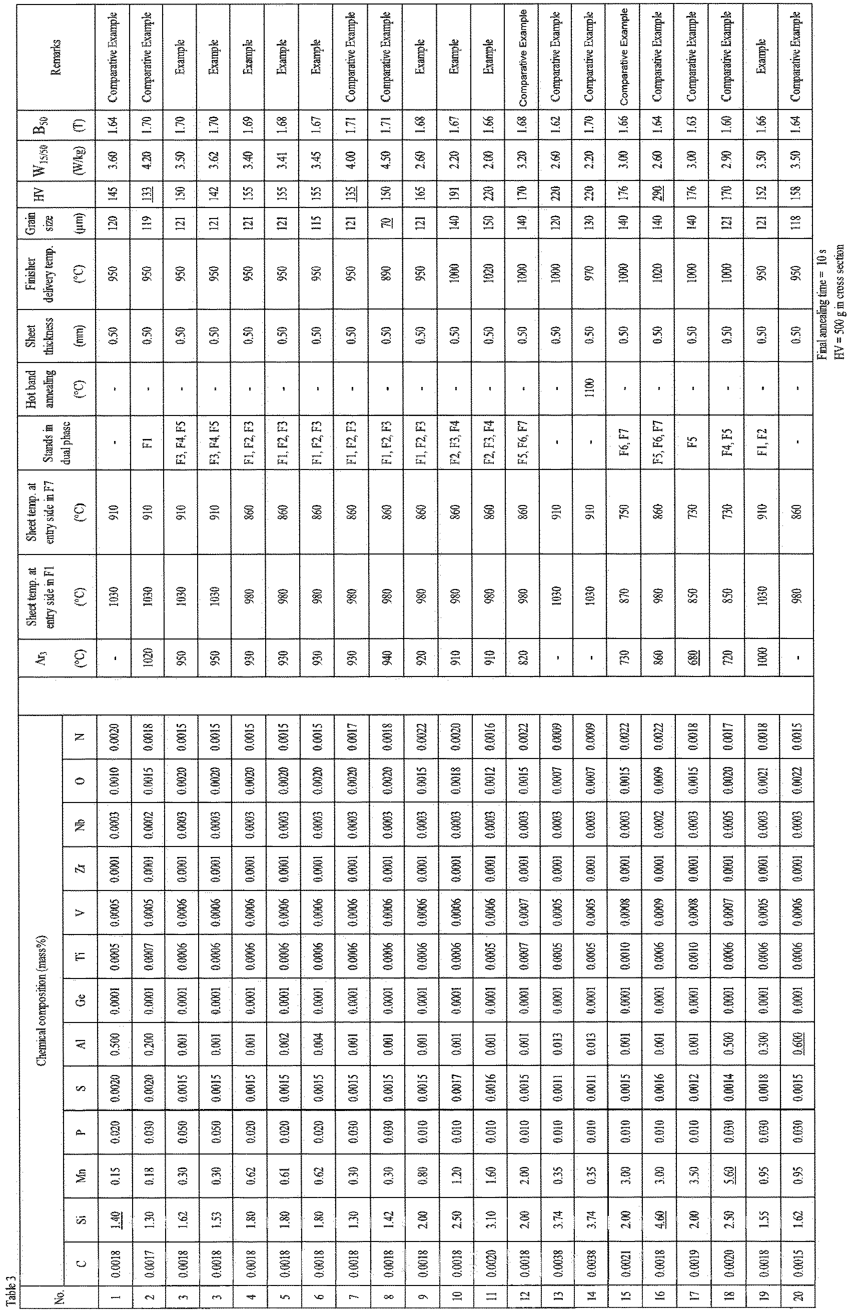

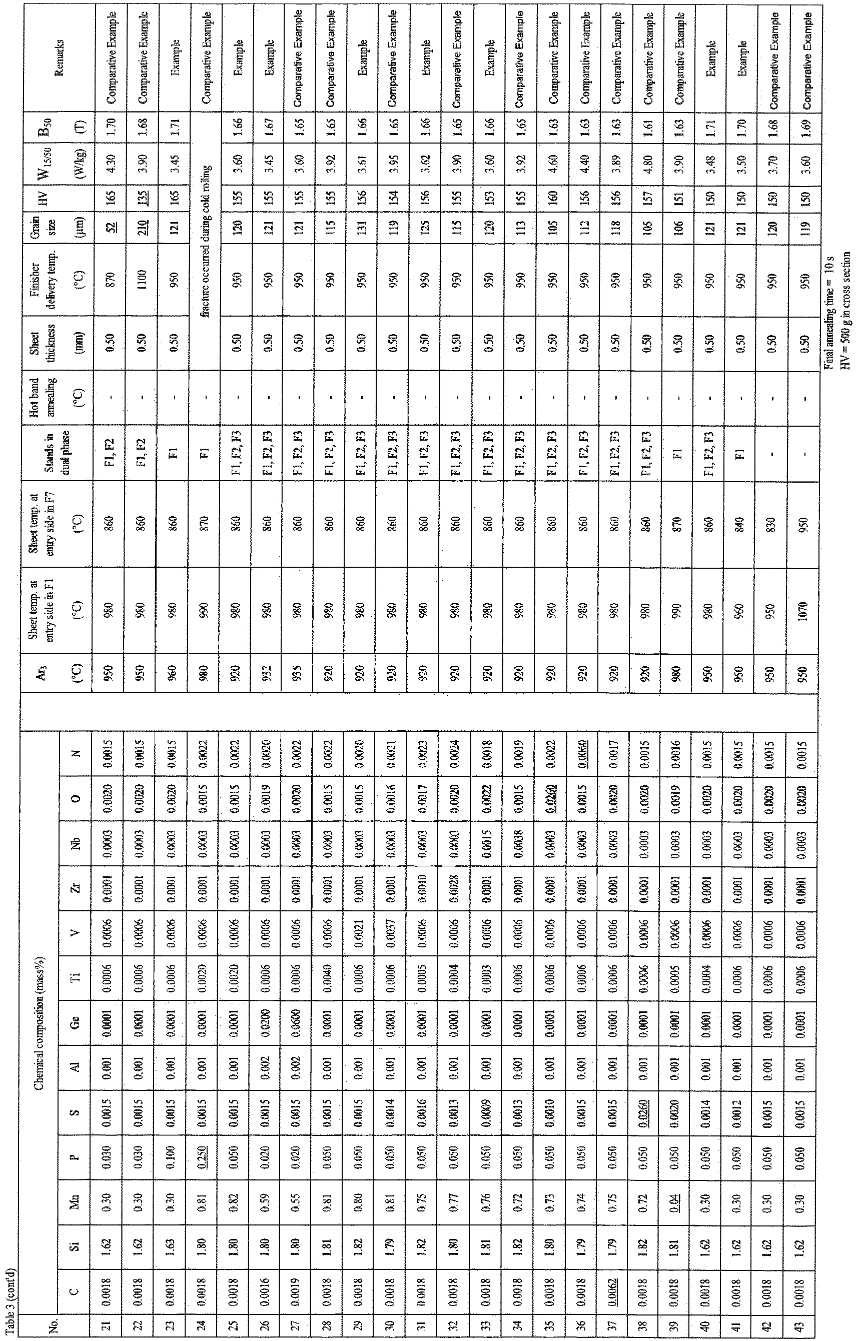

From Table 3, it can be seen that all of the non-oriented electrical steel sheets according to our examples in which the chemical composition, the Ar₃ transformation temperature, the grain size, and the Vickers hardness are within the scope of the disclosure have both excellent magnetic flux density and iron loss properties as compared with the steel sheets in the comparative examples.

### INDUSTRIAL APPLICABILITY

According to the disclosure, it is possible to provide non-oriented electrical steel sheets achieving a good balance between the magnetic flux density and iron loss properties without performing hot band annealing.

### REFERENCE SIGNS LIST

- 1: Ring sample
- 2: V caulking

## Claims

1. A non-oriented electrical steel sheet comprising a chemical composition consisting of, by mass%,
C: 0.0050 % or less,
Si: 1.50 % or more and 4.00 % or less,
Al: 0.020 % or less,
Mn: 0.10 % or more and 5.00 % or less,
S: 0.0200 % or less,
P: 0.200 % or less,
N: 0.0050 % or less, and
O: 0.0200 % or less, and
optionally further one or more selected from the group consisting of, by mass% Ge: 0.0500 % or less,
Ti: 0.0030 % or less,
Nb: 0.0030 % or less,
V: 0.0030 % or less, or
Zr: 0.0020 % or less,
with the balance consisting of Fe and inevitable impurities, wherein
the non-oriented electrical steel sheet has an Ar₃ transformation temperature of 700 °C or higher and 1000 °C or lower, a grain size,
measured in accordance with JIS G0551 after polishing the cross section and etching with nital, of 80 µm or more and 200 µm or
less, and a Vickers hardness, measured in accordance with JIS Z2244 by pushing a 500 g diamond indenter into a cross section of the non-oriented electrical steel sheet, of 140 HV or more and 230 HV or less.

2. A method of producing the non-oriented electrical steel sheet as recited in claim 1, the method comprising performing hot rolling in at least one pass or more in a dual phase region of γ-phase and α-phase.

## Patentansprüche

1. Nichtorientiertes elektrisches Stahlblech, umfassend eine chemische Zusammensetzung, nach Masse-% bestehend aus:
C: 0,0050 % oder weniger,
Si: 1,50 % oder mehr und 4,00 % oder weniger,
Al: 0,020 % oder weniger,
Mn: 0,10 % oder mehr und 5,00 % oder weniger,
S: 0,0200 % oder weniger,
P: 0,200 % oder weniger,
N: 0,0050 % oder weniger, und
O: 0,0200 % oder weniger, und
wahlweise weiterhin eines oder mehrere, ausgewählt aus der Gruppe bestehend aus, nach Masse-% Ge: 0,0500 % oder weniger,
Ti: 0,0030 % oder weniger,
Nb: 0,0030 % oder weniger,
V: 0,0030 % oder weniger, oder
Zr: 0,0020 % oder weniger,
wobei der Rest aus Fe und unvermeidbaren Verunreinigungen besteht, wobei
das nichtorientierte elektrische Stahlblech eine Ar₃-Umwandlungstemperatur von 700 °C oder höher und 1000 °C oder niedriger, eine Körnung, gemessen in Übereinstimmung mit JIS G0551, nach dem Polieren des Querschnitts und Ätzen mit Nital, von 80 µm oder mehr und 200 µm oder weniger, und eine Vickershärte, gemessen in Übereinstimmung mit JIS Z2244 mittels Drückens eines 500 g Diamanteindringkörpers in einen Querschnitt des nichtorientierten elektrischen Stahlblechs, von 140 HV oder mehr und 230 HV oder weniger.

2. Verfahren zum Herstellen des nichtorientierten elektrischen Stahlblechs nach Anspruch 1, wobei das Verfahren das Durchführen von Warmwalzen in mindestens einem Durchgang oder mehr in einem zweiphasigen Bereich der γ-Phase und α-Phase umfasst.

## Revendications

1. Tôle d'acier électrique non orienté comprenant une composition chimique consistant en, en % en masse,
C : 0,0050 % ou moins,
Si : 1,50 % ou plus et 4,00 % ou moins,
Al : 0,020 % ou moins,
Mn : 0,10 % ou plus et 5,00 % ou moins,
S : 0,0200 % ou moins,
P : 0,200 % ou moins,
N : 0,0050 % ou moins, et
0 : 0,0200 % ou moins, et
facultativement en plus un ou plusieurs choisis dans le groupe consistant en, en % en masse,
Ge : 0,0500 % ou moins,
Ti : 0,0030 % ou moins,
Nb : 0,0030 % ou moins,
V : 0,0030 % ou moins, ou
Zr : 0,0020 % ou moins,
le solde étant constitué de Fe et d'impuretés inévitables, dans laquelle
la tôle d'acier électrique non orienté a une température de transformation Ar₃ de 700°C ou supérieure et de 1 000°C ou inférieure, une taille de grain, mesurée conformément à JIS G0551 après polissage de la section transversale et gravure au nital, de 80 µm ou plus et de 200 µm ou moins, et une dureté Vickers, mesurée conformément à JIS Z2244 en poussant un poinçon en diamant de 500 g dans une section transversale de la tôle d'acier électrique non orienté, de 140 HV ou plus et de 230 HV ou moins.

2. Procédé de production de la tôle d'acier électrique non orienté selon la revendication 1, le procédé comprenant la réalisation d'un laminage à chaud en au moins une passe ou plus dans une région à deux phases de phase γ et de phase a.
